Europäisches Patentamt

European Patent Office

Office européen des brevets

(19)

(11) Publication number: **0 050 171**
**B1**

(12) **EUROPEAN PATENT SPECIFICATION**

(45) Date of publication of patent specification: **06.06.84**

(51) Int. Cl.³: **C 04 B 15/00, C 04 B 41/32**

(21) Application number: **80303696.1**

(22) Date of filing: **20.10.80**

(54) A method of making cement products having high mechanical strength.

(43) Date of publication of application:
**28.04.82 Bulletin 82/17**

(45) Publication of the grant of the patent:
**06.06.84 Bulletin 84/23**

(84) Designated Contracting States:
**DE GB**

(56) References cited:
**WO - A - 80/00978**
**CA - A - 1 068 308**
**DE - B - 1 646 661**
**DE - B - 2 210 066**
**US - A - 4 174 972**

(73) Proprietor: **INA SEITO CO., LTD**
**3-6 Koiehon-Machi**
**Tokoname Aichi (JP)**

(72) Inventor: **Harada, Shozo**
**29-13, Hurumichi Higashiwari**
**Tokoname (JP)**
Inventor: **Nagata, Tatsuya**
**3-7, Taya-cho**
**Tokoname Aichi (JP)**
Inventor: **Miwa, Masaki**
**3-7, Taya-cho**
**Tokoname Aichi (JP)**
Inventor: **Koide, Tetsuya**
**7-13, Komei 1-chome Minato**
**Nagoya Aichi (JP)**

(74) Representative: **Fentiman, Denis Richard et al,**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of making cement products, and more particularly, an improvement in the method for making a hardened product of cement by moulding a kneaded mixture of cement, an aggregate and water into a desired shape, and hydrating cement particles in water, air or the like.

A hardened mass of cement undergoes heavy deterioration in mechanical strength if heated to a high temperature of 450°C or above. For example, it is known that if a hardened mass of Portland cement is heated to 450°C, the calcium hydroxide, $Ca(OH)_2$, formed by hydration of calcium silicate is decomposed into CaO and $H_2O$, leading to heavy shrinkage in the mass, and accordingly, a serious reduction in its mechanical strength, particularly compressive strength (Yu Harada and Toru Sakai: "Heat Resistant Concrete", Industry & Products, No. 50, page 119, right column).

It is also known that a hardened mass of aluminous cement likewise has its mechanical strength seriously reduced if heated to a high temperature, though for a different chemical reason from that which has been pointed out with reference to Portland cement [Akira Wakabayashi: "Properties of Aluminous Cement at High Temperatures", Journal of the Society of Ceramics, 69, 2 (1961), page 28].

Therefore, nobody has heretofore thought of firing a hardened mass of cement at a high temperature with a view to improving its strength.

Under these circumstances, it has hitherto been considered that the smoking treatment which is widely utilised for providing a moulded product of clay with a beautifully coloured and lustrous surface is not applicable to a moulded product of cement, because a high smoking temperature reduces its strength. For the same reason, there have hitherto been a lot of unavoidable restrictions to the glazing of a moulded product of cement. Unless use is made of a glaze which melts satisfactorily at a temperature in a range below 450°C in which no reduction in the strength of a hardened mass of cement occurs, the heat required for melting the glaze necessarily causes a series reduction in the mechanical strength of a glazed mass of cement. There has, therefore, been developed a phosphoric acid frit glaze having a low melting point as disclosed in Japanese Patent Publication No. 10530/1974. This glaze is, however, not only inferior in weather and chemical resistance to any ordinary glaze having a higher melting point, but also very expensive. Moreover, it fails to provide a very beautiful finish on the surface of a glazed product of cement. Incidentally, the glazed product on the basis of concrete of blast furnace slag is known from DE—B—2 210066, claims 1, 2 and column 3, lines 12—21.

It is, therefore an object of this invention to provide a method of making a cement product having a higher mechanical strength than any such product known in the art.

It is another object of this invention to provide a method of making a cement product having a smoked surface formed with a thin film of carbon which is beautiful and lustrous.

It is a further object of this invention to provide a method of making a cement product having a beautifully glazed surface formed by a glaze having a high melting point.

Other objects of this invention will become apparent from the following description.

As a result of extensive research efforts by the inventors of this invention, it has been discovered that a decrease in the mechanical strength of a hardened mass of cement fired at a high temperature after it has been subjected to a preliminary hydration process is smaller than an increase in its mechanical strength obtained by a principal hydration process following the firing process. In other words, if a process for firing a moulded product of cement is provided between a preliminary hydration process and a principal hydration process, it is possible to obtain a cement product having a higher mechanical strength than the product of any known method obtained without firing a hardened mass of cement at a high temperature. They have also discovered that an increase in the mechanical strength of a cement product is further enhanced if a small amount of a calcium compound is added into a mixture of cement and an aggregate.

According to this invention, there is, thus, provided a method of making a cement product by adding water to a mixture containing a cement and an aggregate, moulding the resulting mixture into a desired shape, hydrating the resulting moulded product to form a hardened product, and firing that hardened product: characterised by adding water to a mixture of a cement, an aggregate and 0 to 5% by weight of a calcium compound based on the amount of CaO relative to the weight of cement which compound forms CaO when fired at a temperature of 650°C to 950°C, and kneading the whole sufficiently; moulding the resulting kneaded mixture under pressure into a desired shape; hydrating the resulting moulded product to form a preliminarily hardened product; firing said preliminarily hardened product at a temperature of 650°C to 950°C; and hydrating the fired product for finally hardening it.

The above mentioned method may be modified by adding a reinforcing material to the mixture of cement, the aggregate and 0 to 5% by weight of a calcium compound.

Preferred reinforcing materials include glass fibres, ceramic fibres metal fibres and metal wire.

According to another aspect of this invention, it is possible to burn a smoking agent in a reducing atmosphere during the step of firing the preliminarily hardened product, so that fine grains of carbon may be formed by the thermal decomposition of a hydrocarbon contained in the smoking agent, and deposited on the preliminarily hardened product to provide it with a beautiful, lustrous surface covered with a thin film of carbon.

According to a further aspect of this invention, it is possible to apply a glaze having a high melting point onto the surface of the preliminarily hardened product, and fire it at a high temperature, so that the glaze may be melted on the preliminarily hardened product to provide it with a glazed surface which is beautiful and lustrous.

The glaze employed preferably comprises a crude glaze comprising a feldspar and/or clay, a frit glaze, a volatile glaze, or a mixture of a crude glaze and a frit glaze.

The inventors of this invention have not yet fully clarified the mechanism which enables the cement product of this invention to have an increased mechanical strength, but will hereinafter attempt to analyse a mechanism which will most probably work. As is well known, the hardening of cement by hydration proceeds over a very long period of time. There is even a report to the effect that coarse particles of clinker having a particle size of at least 40 $\mu$m retain their original internal structure even up to after thirty or more years. Anderegg and Hubbel report that clinker having a particle size of 15 to 30 $\mu$m obtained a hydrated depth of only 1.5 $\mu$m below the particle surfaces after seven days of hydration, only 3.5 $\mu$m after 28 days, and only 5.0 $\mu$m after 90 days [Anderegg and Hubbel: Proc. A.S.T.M, II (1929); and Concrete (1930)]. In view of these facts, it is presumed that cement particles require a long time of, say, 30 to 100 days to obtain a hydration degree of about 50%, and several more years to permit further hydration to take place very slowly, while their internal portions occupying at least 30% of their total volume remain unhydrated after such a long period of time.

According to the method of this invention, however, an hydrated and hardened layer of each cement particle obtained by preliminary hydration and having a depth of several $\mu$m is broken when it is fired at a high temperature, and the cracks thus formed in the hydrated layer define a passage for water and CaO formed during the high temperature firing process by Ca(OH)$_2$ liberated during the preliminary hardening process and the calcium compound in the raw material, whereby water and CaO reach the unhydrated portions in the interior of the cement particles. It is, thus, possible to obtain during the final hydration process a hydrated layer having a greater depth than that which could be formed if no firing processes were present between the preliminary and final hydration processes. Consequently, hydration is caused to proceed faster into the interior of the cement particles. The calcium oxide entering the interior of the particles forms Ca(OH)$_2$ by absorbing water, and expands to substantially fully fill the interstices in the particles. Carbonation of Ca(OH)$_2$ takes place to form a thick hardened surface layer and a dense structure in the cement particles within a relatively short period of time.

While trying to verify their assumption which has hereinabove been described, the inventors of this invention have found that the longer the period of the preliminary hydration process, the higher mechanical strength the final product shows, if all the other conditions remain the same. This fact is believed to testify the propriety of the inventors' assumption.

The invention will now be described in further detail by way of example.

Example

A mixture containing 100 parts by weight of ordinary Portland cement, 200 parts by weight of river sand from the Shinano River, 2 parts by weight of Adachi lime and 60 parts by weight of water was kneaded for 10 minutes to form a kneaded cement mixture. It was moulded under pressure of 100 kgf/cm$^2$ ($\sim$9.8$\times$10$^6$ Nm$^{-2}$) for four minutes in a 500-ton hydraulic press, whereby a moulded product of cement having a water-solid ratio of 0.1 was obtained. After the moulded product was cured in the air for one day for preliminary hardening, it was fired in such a manner that it was heated to 850°C over a period of two hours in an electric furnace, maintained at 850°C for 15 minutes, and cooled to 20°C over a period of 10 hours. After it was cooled to 20°C, it was cured at 60°C on a wet condition for seven days, whereby a cement product was obtained. The bending strength of the cement product thus obtained was tested by a Tensilon tester having a span of 45 mm and a loading rate of 10 mm/min., and found to be 112.7 kgf/cm$^2$ ($\sim$11.05$\times$10$^6$ Nm$^{-2}$). For the sake of comparison, the foregoing procedures were repeated, except that no Adachi lime was used, and the resulting product showed a bending strength of only 81.8 kgf/cm$^2$ ($\sim$8.02$\times$10$^6$ Nm$^{-2}$).

The term "cement" as herein used does not only mean Portland or aluminous cement, but also includes a mixed cement, such as fly ash cement, blast furnace cement and lime-slag cement. In other words, it should be udnerstood to cover all the substances that are hardened by hydration. For the purpose of this invention, it is necessary to use an "aggregate" which will not undergo any rapid expansion or contraction during the high temperature firing process. Examples of the aggregate material which satisfies such a requirement include a heavy aggregate such as barite, ordinary aggregates such as sand, gravel, rubble, slag and ceramic or porcelain chamotte, and an artificial or other lightweight aggregate. Ceramic or porcelain chamotte is particularly preferable for obtaining an increased mechanical strength according to this invention.

When a calcium compound is used in a preferred embodiment, it is possible to employ any calcium compound if it can form CaO during the firing process, and fill the interstices in the cement particles. For example, it is possible to use $CaCO_3$, CaO, $Ca(OH)_2$ or $CaCO_3 \cdot MgCO_3$. The amount of the calcium compound and the bending strength of the final product have a relationship therebetween which depends to some extent on the kind of the cement involved, and the method of preliminary hydration and the length of time spent therefor, i.e., the amount of $Ca(OH)_2$ liberated from the cement during its preliminary hydration, but generally, it is necessary to maintain the amount of the calcium compound in the range of 0 to 5% by weight based on the amount of CaO relative to the weight of the cement, since any excess over 5% by weight is likely to result in a lower bending strength of the final product than can be obtained when no calcium compound is added, as will hereinafter be shown in Table 1.

According to an embodiment of this invention, it is necessary to apply a moulding pressure of at least 30 kgf/cm² ($\sim 2.94 \times 10^6$ Nm⁻²), and preferably at least 50 kgf/cm² ($\sim 4.9 \times 10^6$ Nm⁻²). It is sufficient to maintain such a moulding pressure for a length of time not longer than five minutes. It is desirable to employ a temperature of 650°C to 950°C for the firing process.

A number of mixtures containing 100 parts by weight of Portland cement, 200 parts by weight of porcelain chamotte and different quantities of $CaCO_3$ (Adachi lime) in the range of 0 to 30 parts by weight as shown in Table 1 below were each kneaded with 60 parts by weight of water for 10 minutes. Each of the kneaded cement mixture thus obtained was moulded under pressure of 100 kgf/cm² ($\sim 9.8 \times 10^6$ Nm⁻²) for four minutes in a 500-ton hydraulic press, whereby a moulded product of cement having a water-solid ratio of 0.1 was obtained. After it was cured in the air for one day, each moulded product was fired and finally hydrated under the same conditions as set forth in the aforesaid Example, whereby a number of cement products were obtained. Table 1 shows the relation between the amount of $CaCO_3$ and the bending strength of each product as actually measured.

TABLE 1

| Amount of $CaCO_3$ (parts by weight) | Bending strength of the product (kgf/cm²) |
|---|---|
| 0 | 98.5 |
| 1 | 102.3 |
| 2 | 109.9 |
| 4 | 119.8 |
| 6 | 122.4 |
| 8 | 109.3 |
| 10 | 94.0 |
| 15 | 92.5 |
| 20 | 72.5 |
| 30 | Unmeasurable due to breakage. |

As is noted from Table 1, the final product shows a maximum bending strength when it is prepared from raw material containing 6 parts by weight of $CaCO_3$ for 100 parts by weight of Portland cement, and the sue of 10 or more parts by weight of $CaCO_3$ results in a lower bending strength than can be obtained when no $CaCO_3$ is added. The addition of 8 parts by weight of $CaCO_3$ to 100 parts by weight of Portland cement, and the use of 10 or more 4.48% by weight of CaO based on the weight of the cement. Accordingly, Table 1 teaches that it is possible to obtain a product having an increased bending strength if from 0 to 5% by weight of a calcium compound based on the amount of CaO relative to the weight of the cement is employed.

Tests were conducted for comparing the mechanical strength of cement products made according to this invention, with those manufactured by a known method including no firing process. Six small pieces 1 to 6 were moulded from a mixture having a cement to aggregate ratio of 1:2, containing 2.0% by weight of $CaCO_3$ relative to the weight of the cement, and kneaded with water. They were cured in wet air for one week, fired at 800°C for 10 minutes, and cured in water for three weeks, whereby there were obtained products according to this invention (Group A products). Another set of six small pieces 1' to 6' were moulded from a mixture having a cement to aggregate ratio of 1:2, and only kneaded with water. They were cured in water for four weeks in accordance with a known method, whereby products as identified at Group B were obtained. Each of the Group A and B products was tested for bending strength, and the results shown in Table 2 below were obtained. The moulded pieces of cement 1 to 6 and 1' to 6' were all of equal size measuring 210 mm by 30 mm by 30 mm but prepared by using different types of aggregates, i.e., porcelain chamotte having a mesh size not larger than 8 mesh (2.5 mm) and a bulk density of 2.39 for the test pieces 1 and 1', porcelain chamotte having a mesh size not larger than 8 mesh (2.5 mm) and a bulk density of 2.36 for the test pieces 2 and 2', porcelain chamotte having a mesh size not larger than 35 mesh (0.5 mm) for the test pieces 3 and 3', ceramic chamotte having a mesh size not larger than 8 mesh (2.5 mm) for the test pieces 4 and 4', kouka-stone having a mesh size not larger than 35 mesh (0.5 mm) for the test pieces 5 and 5', and water slam for the test pieces 6 and 6'. The tests were conducted by using a small strength tester FSP-500 made by Tokyo Koki Kabushiki Kaisha, Japan, and having a span of 90 mm and a loading rate of 12 mm/min.

TABLE 2
Bending strength kgf/cm² ($\times 10^5$ Nm$^{-2}$)

| Moulded piece | Water-solid ratio | Group A product | Group B product |
|---|---|---|---|
| 1 (1') | 0.10 | 130.5 (128.0) | 103.4 (101.4) |
| 2 (2') | 0.10 | 110.2 (108.1) | 99.6 (97.7) |
| 3 (3') | 0.133 | 89.8 (88.1) | 84.6 (83.0) |
| 4 (4') | 0.10 | 83.7 (82.1) | 81.3 (79.7) |
| 5 (5') | 0.133 | 95.0 (93.2) | 82.2 (80.6) |
| 6 (6') | 0.133 | 78.9 (77.4) | 76.1 (74.6) |

As is obvious from Table 2, the products (group A) according to the method of this invention employing a calcium compound in the raw material, and including the firing process show a higher bending strength than the corresponding products (Group B) by the known method including no firing process, irrespective of the aggregate employed.

The method of this invention is not merely advantageous in its capability of producing a cement product having high mechanical strength. According to a further aspect of this invention, it is advantageously possible to provide smoking treatment on a cement product, and apply a glaze having a high melting point thereto, since the high temperature firing process improves its mechanical strength. Particularly, the method of this invention makes it possible to use a frit glaze which is inexpensive, but which has a high melting point, as opposed to any known method, and moreover, to mix an appropriate amount of feldspar, clay or the like into the frit glaze, whereby a glaze which is very suitable for a cement product is prepared to provide it with a glazed surface which is very satisfactory in colour and lustre, and which has superior weather, wear and chemical resistance. Thus, the method of this invention can produce cement products which are available for a wide range of new applications, and has a high degree of utility in building and associated industries.

## Claims

1. A method of making a cement product by adding water to a mixture containing a cement and an aggregate, moulding the resulting mixture into a desired shape, hydrating the resulting moulded product to form a hardened product, and firing that hardened product: characterised by adding water to a mixture of a cement, an aggregate and 0 to 5% by weight of a calcium compound based on the amount of CaO relative to the weight of cement which compound forms CaO when fired at a temperature of 650°C to 950°C, and kneading the whole sufficiently; moulding the resulting kneaded mixture under pressure into a desired shape; hydrating the resulting moulded product to form a preliminarily hardened product; firing said preliminarily hardened product at a temperature of 650°C to 950°C; and hydrating the fired product for finally hardening it.

2. A method according to claim 1 which is modified by adding a reinforcing material to the mixture of cement, the aggregate and 0 to 5% by weight of a calcium compound.

3. A method according to claim 2, wherein said reinforcing material comprises glass fibres, ceramic fibres, metal fibres, or metal wire.

4. A method according to any preceding claim, wherein said step of firing includes burning in a reducing atmosphere a smoking agent containing a hydrocarbon, whereby said hydrocarbon is thermally decomposed to form fine grains of carbon on the surface of said fired product.

5. A method according to claim 1, 2 or 3, wherein said step of firing includes applying a glaze having a high melting point onto the surface of said preliminarily hardened product.

6. A method according to claim 5, wherein said glaze is selected from among a crude glaze, a frit glaze, a volatile glaze, and a mixture of a crude glaze and a frit glaze.

7. A method according to claim 6, wherein said crude glaze comprises feldspar and/or clay.

**Patentansprüche**

1. Verfahren zum Herstellen eines Zementproduktes, bei dem Wasser einer Zement und Zuschlagstoff enthaltenden Mischung hinzugefügt, die sich ergebende Mischung in eine gewünschte Form geformt, das sich ergebende geformte Produkt zur Bildung eines gehärteten Produkts hydratisiert und das gehärtete Produkt gebrannt wird, dadurch gekennzeichnet, daß Wasser einer Mischung aus Zement, Zuschlagstoff und 0 bis 5 Gewichts-% einer Calciumverbindung, bezogen auf die Menge Calciumoxid relativ zum Gewicht des Zementes, hinzugefügt wird, wobei die Verbindung Calciumoxid bildet, wenn sie bei einer Temperatur von 650°C bis 950°C gebrannt wird, und das Ganze ausreichend geknetet wird, daß die resultierende geknetete Mischung unter Druck in eine gewünschte Form geformt, das sich ergebende geformte Produkt zur Bildung eines vorläufig gehärteten Produktes hydratisiert, das vorläufig gehärtete Produkt bei einer Temperatur von 650°C bis 950°C gebrannt und das gebrannte Produkt zu seiner endgültigen Härtung hydratisiert wird.

2. Verfahren nach Anspruch 1, welches dadurch modifiziert ist, daß der Mischung aus Zement, Zuschlagstoff und 0 bis 5 Gewichts-% Calciumverbindung ein Verstärkungsmaterial hinzugefügt wird.

3. Verfahren nach Anspruch 2, worin das Verstärkungsmaterial Glasfasern, Keramikfasern, Metallfasern oder Metalldraht umfaßt.

4. Verfahren nach irgendeinem vorhergehenden Anspruch, worin zu dem Brennen das Verbrennen eines einen Kohlenwasserstoff enthaltenden Rauchagens in einer reduzierenden Atmosphäre gehört, wodurch der Kohlenwasserstoff thermisch zersetzt wird, um feine Kohlenfasern auf der Oberfläche des gebrannten Produktes zu bilden.

5. Verfahren nach Anspruch 1, 2 oder 3, worin zu dem Brennen das Aufbringen einer Glasur mit einem hohen Schmelzpunkt auf die Oberfläche des vorläufig gehärteten Produkts gehört.

6. Verfahren nach Anspruch 5, worin die Glasur eine Rohglasur, eine Frittenglasur, eine flüchtige Glasur oder eine Mischung aus Rohglasur und einer Frittenglasur ist.

7. Verfahren nach Anspruch 6, worin die Rohglasur Feldspat und/oder Ton enthält.

**Revendications**

1. Procédé de fabrication d'un produit de ciment en ajoutant de l'eau à un mélange contenant un ciment et un agrégat, en moulant le mélange obtenu à une forme désirée, en hydratant le produit moulé obtenu pour former un produit durci et en cuisant ce produit durci, caractérisé par le fait que l'on ajoute de l'eau à un mélange d'un ciment, d'un agrégat et de 0 à 5% en poids d'un composé de calcium, basé sur la quantité de CaO, relativement au poids de ciment, ce composé formant CaO lorsqu'on le cuit à une température de 650 à 950°C, et que l'on malaxe le tout suffisamment; que l'on moule sous pression, à une forme désirée, le mélange malaxé obtenu, que l'on hydrate le produit moulé obtenu pour former un produit durci de façon préliminaire, que l'on cuit ce produit durci de façon préliminaire, à une température de 650 à 950°, et que l'on hydrate le produit cuit pour le durcir finalement.

2. Procédé selon la revendication 1 qui est modifié par l'addition d'une matière de renforcement au mélange de ciment, de l'agrégat et de 0 à 5% en poids d'un composé de calcium.

3. Procédé selon la revendication 2, dans lequel la matière de renforcement comprend des fibres de verre, des fibres de céramique, des fibres de métal ou du fil métallique.

4. Procédé selon l'une quelconque des revendications précédentes, dans lequel l'étape de cuisson comporte la combustion en atmosphère réductrice d'un agent formateur de fumée contenant un hydrocarbure, de sorte que cet hydrocarbure se décompose thermiquement pour former des grains fins de carbone sur la surface de produit cuit.

5. Procédé selon les revendications 1, 2 et 3, dans lequel l'étape de cuisson comporte l'application d'un émail ayant un point de fusion élevé sur la surface du produit durci de façon préliminaire.

6. Procédé selon la revendication 5, dans lequel l'émail est choisi entre un émail fritté, un émail volatil et un mélange d'un émail bru et d'un émail fritté.

7. Procédé selon la revendication 6, dans lequel l'émail brut comprend du feldspath et/ou de l'argile.